# EUROPEAN PATENT SPECIFICATION

(11) **EP 3 144 632 B1**
(45) Date of publication and mention of the grant of the patent: **11.08.2021**
(21) Application number: 15185829.7
(22) Date of filing: 18.09.2015
(51) Int. Cl.: G01B 11/00, G01B 21/04

(54) **COORDINATE MEASURING MACHINE HAVING A CAMERA**
KOORDINATENMESSMASCHINE MIT EINER KAMERA
MACHINE DE MESURE DE COORDONNÉE DOTÉE D'UNE CAMÉRA

(43) Date of publication of application: 22.03.2017
(73) Proprietor: Hexagon Technology Center GmbH, 9435 Heerbrugg (CH)
(72) Inventor: Pettersson, Bo, 1225 Luxembourg (LU); Zebhauser, Benedikt, 9400 Rorschach (CH); Jordil, Pascal, 1612 Ecoteaux (CH)
(74) Representative: Kaminski Harmann

(56) References cited:
- WO-A1-2013/083730
- JP-A- 2004 093 190
- US-A- 5 615 489
- US-A1- 2006 007 449

## Description

The present invention generally pertains to a method and a coordinate measuring machine (CMM) for determining at least one spatial coordinate of a measurement point on an object. Specifically, the invention pertains to a CMM having an imaging unit comprising one or more cameras for taking one or more images of the object, wherein for planning a measuring path of a probe head of the CMM, the imaging unit is adapted to determine edges of the object in the images. Edge detection comprises a set of mathematical methods that aim at identifying points in a digital image at which the image brightness has discontinuities. The methods are known per se and used in image processing and machine vision. Operators that can be used for the edge detection in the method and CMM according to this invention are, for instance, the Sobel operator or the Canny edge detector.

It is common practice to inspect a workpiece after its production to determine the accuracy of the production process, that is, workpiece dimensions, correctness of angles, etc. For instance, such a measurement can be performed using a CMM.

For inspection the workpiece is put on a base of such a coordinate measuring machine and a probe head being movable relative to the base is led to predetermined measurement points of the workpiece to obtain the exact coordinate data of these points. Thus, it is possible to determine the production accuracy of the workpiece.

In a conventional 3-D measurement machine, the probe head is supported for movement along three mutually perpendicular axes (in directions X, Y and Z). Thereby, the probe head can be guided to any arbitrary point within the working volume of the coordinate measuring machine.

In order to determine the coordinates, known measurement means capable to determine the probe head's distance from a known point of origin are employed. For instance, scales or other suitable measuring means are used for this purpose. The obtained coordinate data can then be stored in a memory such as a RAM and used for further processing.

With rather complicated structures of the workpiece, however, there arises a problem that it is cumbersome to guide the probe head to the selected target points. That is, it is required to timely reduce the movement speed of the probe head in order to prevent damage of the probe head or of the workpiece due to a too strong impact, when the probe head gets into abutment against the workpiece. In particular such a problem may arise with a fully automated coordinate measuring machine.

To address this general problem, WO 2013/083730 describes a CMM comprising a camera having a range image sensor with a sensor array. The range camera is adapted to be directed to an object to be measured and is capable to provide the at least first image as a range image of the object to be measured. Range pixels of the range image correspond to a 3D-position of a target point of the object to be measured and are used as the image data for the creation of a point cloud of the object to be measured. Furthermore, the controller of the coordinate measuring machine serves to control the drive mechanism on the basis of the 3D-positions of the target points. Range imaging in general is known as a technology which is used to produce a 2D-image showing the distance to points in a scene from a specific point. The resulting image which is generally called range image has pixel values which correspond to the distance of the respective target point at the object. For instance, brighter values mean shorter distances or vice versa. It is even possible to properly calibrate the sensor producing such a range image which enables that pixel values can be given directly in physical units such as meters. For each of the pixels of the range image (range pixels) one separate sensor capable to measure a distance is assigned. Since the distance of the target point assigned to the respective sensor (pixel) is known, the 3D-position of the target point can be exactly determined.

Generally, CMM have two main working modes: touch trigger mode and scanning mode.

In the touch trigger mode, the CMM takes single measurement points using a touch trigger probe. The stylus - usually supported by the touch trigger probe which is supported by a probe head - is moved at constant low speed toward the workpiece. When the stylus tip contacts the workpiece surface, a trigger signal is generated by the touch trigger probe, which then is used to freeze the scales' positions. This means that operating that way is quite slow, does not collect dense information, but generates quite accurate measurements. It is, in any case, suitable for plenty of applications.

In the scanning mode, the touch trigger probe is replaced by a scanning probe. This kind of probe does not only generate a trigger when its stylus tip contacts the workpiece, but the stylus deflection is accurately measured. It is however first needed to bring the stylus tip into contact with the workpiece, ensuring also a predefined deflection, before starting with the scanning process itself.

In many applications, the nominal values of the workpiece are known, e. g. from a CAD model providing the nominal data, and the real geometry (actual data) of the manufactured workpiece is very close to the nominal values. So, after a standard alignment phase, the location of the surface to be scanned is well known. In this case, it is easy and fast to bring the stylus tip in contact with the targeted feature. It can however sometimes be much trickier and it is described in the next section.

Sometimes, even though the workpiece location is known, the feature to be measured can be quite far away from its nominal position. This happens for instance with blades and "blisks" (blade disks), where the trailing edge is thin and can be quite distant from its nominal position. In this case, the feature needs to be localised before starting the scanning phase. To do so, the stylus tip usually is moved very slowly toward the workpiece, at a location where there is surely some material, to reach a contact position without risking any collision, which would damage the part or break a component of the sensor chain (probe head, extension, scanning probe and stylus).

Also other procedures can be found in the prior art: WO 2013/050729 for example teaches us to use the stylus body itself, and therefore not the stylus tip, to roughly locate the workpiece feature. In this case, a lot of measurements are needed to extract the feature location, what is quite slow. WO 2013/156767 discloses that the stylus tip can be moved using traverses perpendicular to the edge to be measured and coming closer to it, step by step, until it enters into contact with the searched edge. During the time the stylus tip is then in contact with the surface, scanning information also can be collected and then stitched together with other portions collected during other contact phases. Again this solution is slow and cannot be used for all measurement tasks. In the proposed solution of WO 2013/156767, the stylus tip needs to be first brought into contact with the workpiece, consecutively starting a scanning path. This phase can be quite fast and straightforward, if the CAD of the workpiece is known and if the workpiece tolerances are well respected, but it can become quite tricky, if the workpiece shows important dimensional errors.

It is therefore an object of the present invention to provide an improved method and an improved CMM allowing an efficient and fast way to localise the concerned workpiece feature.

There is need for a coordinate measuring machine capable to achieve fast determination of coordinate data of selected target points, and capable to reduce a risk of damage of a probe head or a workpiece to be measured. It is an object of the current invention to provide such a coordinate measuring machine.

It is another object of the invention to provide such a CMM that enables the user to control a measuring process of a coordinate measuring machine without contact.

It is a further object to provide such a CMM having smaller and less expensive components, i.e. using a simpler, smaller and cheaper camera type than range cameras, e. g. charged coupled device (CCD) cameras.

At least one of these objects is achieved by the method according to claim 1, the coordinate measuring machine according to claim 8, and/or the dependent claims of the present invention. There is also a computer program product according to claim 15.

According to the invention, for accelerating the measurement process, digital images of the object to be measured are taken and edge detection is used for determining the real shape of the object. The main advantages of the proposed invention are:
- Very fast localisation of unknown edges, both for scanning and touch trigger probing,
- improved overall throughput for all kind of measurements,
- precise path prediction with nominal object data being provided or not,
- collision risk greatly reduced, and
- full flexibility on the concerned workpiece types.

A first aspect of the present invention relates to a method for determining at least one spatial coordinate of a measurement point of an object with a coordinate measuring machine. The method comprises
- capturing at least a first image of the object, the object being positioned in a measuring volume of the coordinate measuring machine,
- determining edges in the at least first image,
- defining, based on the determined edges, a measurement path for a probe head of the coordinate measuring machine for approaching the measurement point with the probe head, and
- driving the probe head along the measurement path.

The method according to the invention is defined in claim 1.

According to the invention, nominal design data of the object, e. g. a computer aided design model, is provided. Particularly nominal design data of a multitude of different object types is provided.

In one embodiment, dimensions of the object are determined based on the determined edges, and differences between the determined dimensions of the object and the nominal design data of the object are determined.

According to the invention, the object is identified based on the recognized edges and on the nominal design data.

In yet another embodiment, the nominal design data of the object comprises a pre-defined measurement path, and defining the measurement path for the probe head comprises adapting the pre-defined measurement path based on the determined edges.

In one embodiment of the method according to the invention, a second image of the object is captured imaging an area of the object which is not visible in the first image, and edges are determined in the first image and in the second image.

In one embodiment, the first image is captured by a first camera and the second image is captured by a second camera, preferably simultaneously or basically simultaneously.

In another embodiment, the first image and the second image are captured successively by a first camera, wherein a position and/or orientation of the first camera is changed between capturing the first image and the second image based on information derived from the first image. In particular, the position and/or orientation are changed at least partially based on the determined edges of the first image.

Another aspect of the present invention relates to a coordinate measuring machine (CMM) for execution of said method.

Such a CMM for determining at least one spatial coordinate of a measurement point of an object comprises
- a frame structure comprising a base and a plurality of frame elements, wherein a probe head is attached to one of the frame elements,
- a drive mechanism, adapted to drive the probe head in a manner such that the probe head is capable to move relative to the base for approaching a measurement point in a measuring volume, the measuring volume representing a particular volume inside which the at least one spatial coordinate of the measurement point is determinable as to a design of the CMM, in particular as to a provided mobility of the probe head,
- an imaging unit comprising a first camera that is adapted to be directed to the measuring volume for providing at least a first image of an object that is positioned in the measuring volume, and
- a controller, adapted to control the drive mechanism.

According to the invention, the imaging unit of the CMM is adapted to determine edges in the at least first image, and the controller is adapted to control the drive mechanism based on these recognized edges. The imaging unit comprises a data storage device to store nominal design data of objects to be measured by the CMM.

The apparatus according to the invention is defined in claim 8.

In one embodiment of the CMM according to the invention, the imaging unit
- is adapted to determine dimensions of the object based on the recognized edges, and
- is adapted to determine differences between the determined dimensions of the object and the nominal design data of the object.

In another embodiment, the CMM is adapted as a portal-type CMM, wherein the frame structure comprises one or two legs, a bridging portion, a moving carriage, and a ram to which the probe head is attached. According to this embodiment, the first camera is positioned at the frame structure.

In yet another embodiment, the imaging unit
- comprises a second camera that is positioned and oriented in such a way that it is directed to the measuring volume for providing at least a second image of the object, the at least second image imaging an area of the object which is not visible for the first camera, and
- is adapted to recognize edges in the first image and in the second image.

In yet another embodiment, the first camera or a second camera is positioned at the probe head.

In a further embodiment, at least one receptacle is provided at the frame structure and/or at the probe head, wherein the at least one receptacle and the first camera are built so that the first camera is modularly linkable to the at least one receptacle and modularly releasable from the at least one receptacle.

In another embodiment of the CMM according to the invention, the imaging unit is adapted to generate a digital model of the object at least partially based on recognized edges, in particular a CAD-model.

The invention also relates to a computer programme product, comprising programme code which is stored on a machine-readable medium, or being embodied by an electromagnetic wave comprising a programme code segment, and having computer-executable instructions for performing, when run on the calculation means and the controller of the CMM according to the invention, the following steps of the method according to the invention:
- capturing at least a first image of the object, the object being positioned in a measuring volume of the coordinate measuring machine,
- determining edges in the at least first image,
- defining, based on the determined edges, a measurement path for a probe head of the coordinate measuring machine for approaching the measurement point with the probe head, and
- driving the probe head along the measurement path.

The computer program product according to the invention is defined in claim 15.

The invention in the following will be described in detail by referring to exemplary embodiments that are accompanied by figures, in which:
- Fig. 1: is a schematic view of a first embodiment of a coordinate measuring machine according to the invention;
- Fig. 2: is a schematic view of a second embodiment of a coordinate measuring machine according to the invention;
- Fig. 3: shows an image of an object to be measured taken by a camera of a coordinate measuring machine according to the invention;
- Fig. 4: shows edges of the object that are detectable in the image of Figure 3.
- Fig. 5: shows digital data of the object with features corresponding to the detectable edges;
- Fig. 6: shows a third exemplary embodiment of a coordinate measuring machine according to the invention;
- Fig. 7: shows a fourth exemplary embodiment of a coordinate measuring machine according to the invention; and
- Figs. 8a-c: show flow charts for illustrating three exemplary embodiments of a method according to the invention.

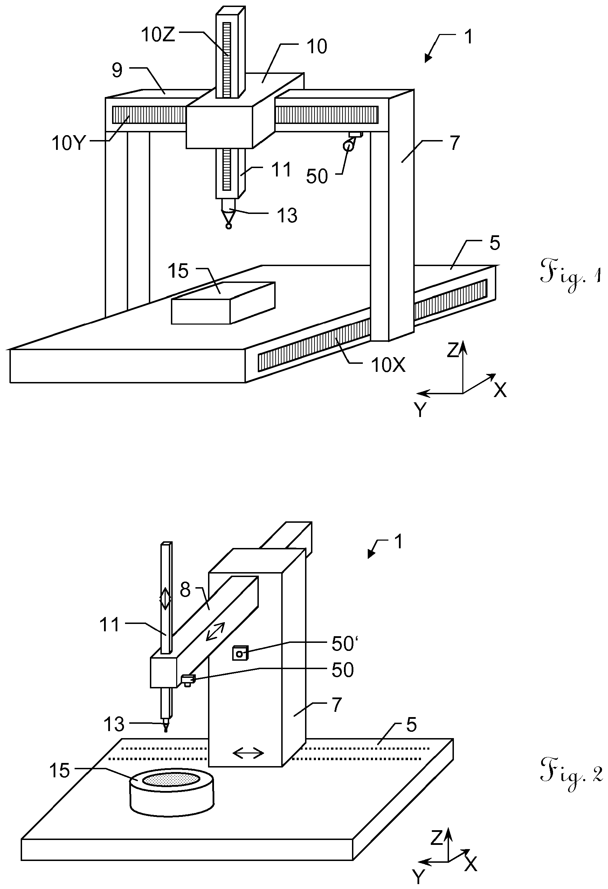

Figure 1 depicts a first exemplary embodiment of a portal coordinate measuring machine 1 (CMM) according to the invention, the coordinate measuring machine 1 comprising a base 5 and a frame structure for linking a probe head 13 to the base 5, the frame structure comprising several frame components 7, 9-11 being movable with respect to another. The first frame component 7 is a portal having two portal legs, which are connected by a bridging portion 9 at their upper ends. Driven by a drive mechanism (not shown), the frame component 7 is capable to move along the longitudinal sides of the base 5. This direction corresponds to a first direction X. The movement of the frame component 7 is performed by a gear rack attached to the base 5, which is meshing with a pinion on the frame component 7.

A second frame component 10 (carriage) is movably arranged on the bridging portion 9 of the frame. The movement of the second frame component 10 is also achieved by a rack and pinion. A vertical rod 11 (sleeve), building a third frame component, is movably incorporated into the second frame component 10. At the bottom portion of the vertical rod 11 a probe head 13 is provided. The vertical rod 11 is also movable via rack and pinion.

Thus, the probe head 13 is movable to any desired point in a measuring volume (work zone) of the coordinate measuring machine 1 in the directions X, Y and Z. The measuring volume is defined by the base 5 and the frame components 7, 9 and 11. The three space directions X, Y and Z are preferably orthogonal to one another, although this is not necessary for the present invention. It should be noted that a drive mechanism and a controller for driving the racks and pinions, and, thus, for driving the probe head 13 is not shown.

An object 15 to be measured is positioned in the space of the measuring volume on the base 5.

The probe head 13, on which a stylus is arranged exemplarily, is fastened on the lower free end of the rod 11. The stylus is used in a manner known per se for touching the object 15 to be measured. However, the present invention is not restricted to a tactile coordinate measuring machine and may likewise be used for coordinate measuring machines in which a measurement point is approached in a non-contact manner, i.e. for example a coordinate measuring machine with an optical scanning head. More generally, the probe head 13 may be designed for arranging a contact probe, e. g. a scanning or touch trigger probe, or a non-contact probe, particularly an optical, capacitance or inductance probe.

Two of the most common types of bearings between the movable members and the guides are air bearings or mechanical bearings (e. g. linear circulating plus rails). The air bearings give the advantage that there is no friction in the movement (which may introduce different kind of errors like angle errors or hysteresis). The disadvantage of air bearings is that the stiffness is lower than in mechanical bearings, so that particularly dynamic errors may occur. In mechanical types, the stiffness in the bearing system is typically higher but there is friction and the friction forces may introduce errors. However, the invention may be applied for both types of bearings.

Summed up, the coordinate measuring machine 1 is built for determination of three space coordinates of a measurement point on an object 15 to be measured and, therefore, comprises three linear drive mechanisms for provision of movability of the probe head 13 relative to the base 5 in the first, second and third direction (X, Y and Z direction) .

Each linear drive mechanism has a linear guide, one in the first, one in the second and one in the third direction (X, Y and Z direction), respectively. In a simple embodiment, the linear guide of the X-direction drive mechanism is formed by two edge-building surfaces of the base 5, the linear guide of the Y-direction drive mechanism is formed by two or three surfaces of the bridge and the linear guide of the Z-direction drive mechanism is formed by a cubical hole in the Y-carriage member 10.

Furthermore, each linear drive mechanism comprises a movable member being supported for movement along the guide by bearings. In particular, the movable member of the X-direction drive mechanism is embodied as X-carriage having mutually facing surfaces with respect to the above mentioned two guiding surfaces of the base 5. The movable member of the Y-direction drive mechanism is embodied as Y-carriage having mutually facing surfaces with respect to the above mentioned two or three guiding surfaces of the bridge. And, the movable member of the Z-direction drive mechanism is formed by Z-column 11 (sleeve) having mutually facing surfaces with respect to the inner surfaces of the cubical hole in the Y-carriage 10.

Moreover, each linear drive mechanism comprises a linear measuring instrument for determination of a first, a second or a third drive position, respectively, of each movable member in the first, the second or the third direction (X, Y and Z direction), respectively.

In this exemplary embodiment of Figure 1, the portal legs 7 each have a movable X-carriage which allows movement of the first frame component in X-direction.

A measuring scale 10X being part of the X-measuring instrument is schematically represented on the long side of the base 5, wherein the scale 10X extends parallel to the X-direction. The scale may be a glass measuring scale, e.g. having incremental or absolute coding, with which a drive position in the X-direction of the X-carriage can be determined. It is to be understood that the measuring instrument may furthermore contain suitable sensors for reading the measuring scale 10X, although for the sake of simplicity these are not represented here. However, it should be pointed out that the invention is not restricted to the use of glass measuring scales, and therefore may also be used with other measuring instruments for recording the drive/travelling-positions of the movable members of the drive mechanisms.

Another measuring scale 10Y is arranged parallel to the Y-direction on the bridging portion 9 of the frame. Finally, another measuring scale 10Z is also arranged parallel to the Z-direction on the Z-ram 11. By means of the measuring scales 10Y,10Z as part of the linear measuring instruments, it is possible to record the present drive positions of the carriage 10 in Y-direction and of the sleeve 11 in the Z-direction metrologically in a manner which is known per se. Not shown is a controlling and processing unit, which is designed to actuate the motor drives of the coordinate measuring machine 1 so that the probe head 13 travels to the measurement point. The controlling and processing unit comprises a processor and a memory. In particular, the controlling and processing unit is designed for determining the three space-coordinates of the measurement point on the object 15 as a function of at least the first, the second and the third drive position of the three drive mechanisms. For manual operation, the control unit may be connected to a user console. It is also possible for the control unit to fully automatically approach and measure measurement points of the object 15 to be measured.

Because the design of coordinate measuring machines of the generic kind as well as the design of different linear guides and different linear measuring instruments are well known to skilled persons, it must be understood that numerous modifications and combinations of different features can be made.

According to the invention, the CMM 1 comprises a camera 50, in particular being built as a CCD camera, for capturing images of the measuring volume.

The camera 50 is arranged on the bridging portion 9 of the frame 7 and, therefore, being positionable by moving the frame component 7 along the X-axis. According to the present embodiment, the camera comprises a camera base and a camera objective, the objective being swivelable relatively to the camera base and, thus, providing additional alignment axis. However, the present invention is not restricted to the use of cameras being enabled for aligning their capturing directions and may likewise be used with other camera types for capturing images according to their arrangement at the CMM.

For defining an optimized measuring path for measuring the object 15 with the measuring sensor at the probe head 13, actual dimensions of the object 15 need to be determined. Therefore, the measuring volume is at least partly captured and analysed before measuring the object 15 precisely. The capturing is done by means of the camera 50 which takes at least one image of the object 15. According to the invention, the analysis comprises edge detection in the at least one image.

Optionally, the analysis further comprises determining if the object 15 to be measured is placed on the base 5, if the detected object 15 is of the type of demanded objects, or if the object 15 is located and positioned correctly.

The camera 50 is aligned so that at least a first image of at least a first part of the measuring volume is capturable by the camera 50 and the at least first image is captured then. Surface data is derived from the at least first image by image processing, wherein the surface data represents a surface profile according to a content of the at least first part of the measuring volume. On basis of the gathered surface data controlling information is generated. Such controlling information is then provided for a subsequent execution of the precise measurement of the object.

As the camera 50 is moveable along the X-axis and is alignable according to its pivotability, additional images of the measuring volume, e. g. of additional parts of the measuring volume, may be captured and considered for deriving the surface data of the object.

Above described functionality may also provide an improved user-friendliness for coordinate measuring machines as with starting the functionality an automated scan of the measuring volume may be performed and the presence, type, position, and/or orientation of the object 15 on the base 5 may be determined. A measuring program for measuring the object 15 may be chosen or generated and the object 15 is measured automatically.

Figure 2 shows a further exemplary embodiment of a coordinate measuring machine 1 (CMM) according to the invention, the CMM 1 comprising a base 5 and the frame components 7, 8, 11 for providing movability of the probe head 13 in three directions (X-, Y- and Z-direction) relative to the base 5. Furthermore, the frame components 7, 8, 11 are moveable relative to each other by drive mechanisms (not shown) linking the three frame components 7, 8, 11 and the base 5.

An object 15 to be measured is placed on the base 5. For measuring this object 15 the probe head 13 is approached to the surface of the object 15. Coordinates are determined according to a predefined measuring path on which a tactile measuring sensor at the probe head 13 is guided and the surface profile of the object is determined depending on that measurement.

According to the invention, in advance of determining the surface of the object 15, an edge determination functionality is executed using the two cameras 50, 50' arranged at the frame structure of the CMM 1. The cameras 50, 50' may be built as simple overview cameras, e. g. webcams. They are moveable by moving the respective frame components 7, 8 the cameras 50, 50' are arranged at.

In context of the edge determination functionality at least one image is captured with each camera 50, 50' and, thus, at least a partly overview of the working zone and the object 15 is provided. In case the images do only show a part of the measuring zone the object is not laying inside, the cameras 50, 50' are relocated and further images are captured so that the object 15 and its edges are detectable by image processing of the captured images using suitable edge detection methods. A check whether the object is captured by the images is performed by image processing of the images, as well.

The CMM 1 further comprises a memory unit on which object data is stored. After detecting the object 15 from the captured images and detecting edges of the object 15 in the images, this data is compared with the object data stored in the memory unit. The type of object present on the base 5 may be identified on basis of comparing the data, and if there are any significant dimensional differences between the object data and the object 15, these are discovered.

A measuring path accounting to the identified object type is chosen from the object data, and if significant differences have been discovered, the measuring path can be adapted accordingly. Controlling information is generated depending on the chosen and adapted measuring path, providing controlling data for measuring the surface of the object 15 by the measuring sensor at the probe head 13. The generated controlling data is then used for guiding the probe head 13 (and measuring sensor) relative to the surface of the object 15 so that the measuring points on the object 15 are detectable with a defined point-to-point resolution. Furthermore, the controlling information is generated in dependency of the measuring sensor to be used for measuring the object 15.

According to a particular embodiment, in a first phase - to simplify the image processing - reference images can be taken with the cameras e. g. while simultaneously automatically producing a measuring program for the object. Based on these images easily recognising of the part, using the correct part program and checking the alignment is provided.

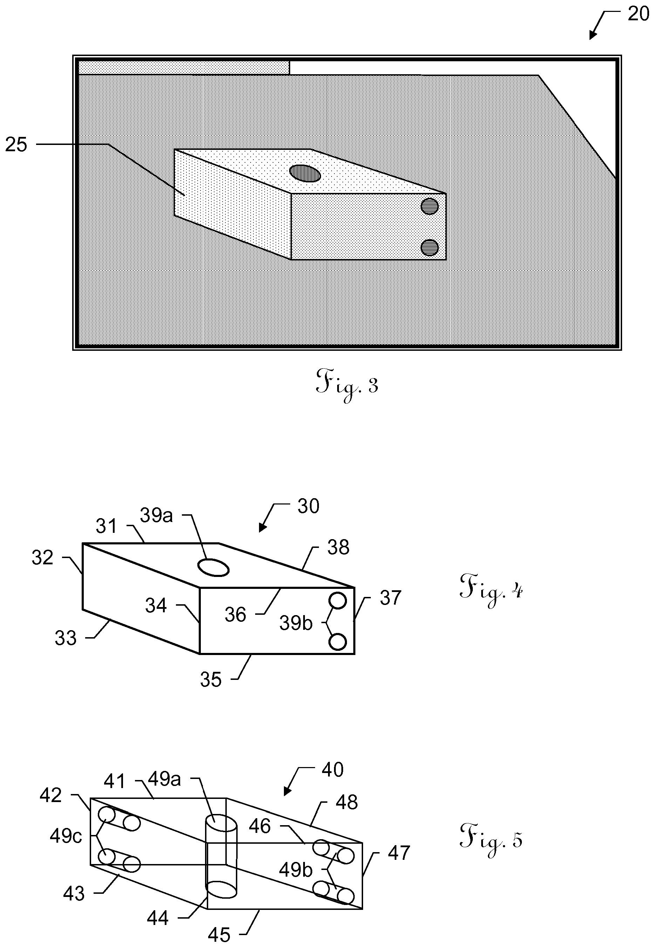

Figure 3 shows an image 20 taken by the camera of the CMM from a certain viewpoint. In the image, an object 25 is positioned in the measuring volume of the CMM. A number of faces of the object 25 are shown in the image 20, as well as three borings. The faces and borings all have a different brightness level.

In Figure 4, an edge model 30 of the same object is shown. This has been created by means of an edge detection functionality of the imaging unit which has determined a number of edges 30-38, 39a,b of the object in the image of Figure 3. Edge detection comprises a set of mathematical methods that aim at identifying points in a digital image at which the image brightness has discontinuities. The methods are known per se and used in image processing and machine vision. Operators that can be used for the edge detection in the method and CMM according to this invention are, for instance, the Sobel operator or the Canny edge detector.

The determined edges comprise the edges 30-38 between the faces of the object and the edges of the borings 39a, 39b.

Figure 5 shows a digital model 40 of the object. By comparing edges of the edge model 30 of Figure 4 with the digital model 40, e. g. with the model edges 41-48, 49a-c, it is possible to determine whether the imaged object is of the same type as the digital model 40. It is further possible to determine a position and orientation of the object and any significant deviations of the object from the digital model.

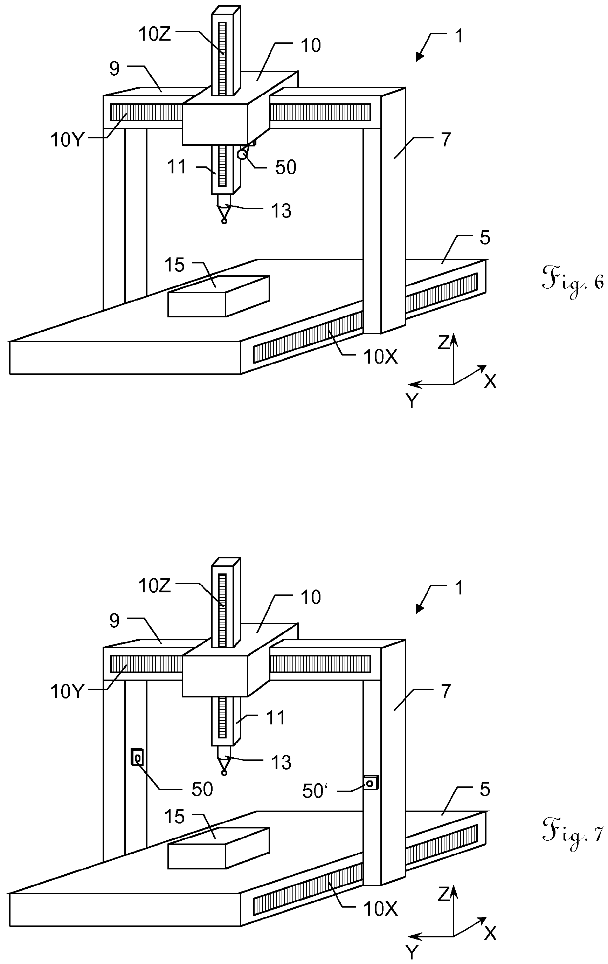

In Figure 6 and Figure 7 two further exemplary embodiments of a CMM 1 are shown. As according to the invention at least one camera of the CMM 1 is used to precisely localise features of the object 15 to be measured, the positioning of the camera or cameras is important. Possible positions of the camera(s) comprise the following:
- on the probe head 13,
- on the bridging portion 9 (one or two locations),
- on the Z-ram 11,
- on one or both legs of the frame 7,
- on the moving carriage 10, or
- on a combination of the previously mentioned options.

Alternatively, connectors for the camera(s) could be placed at the different locations to allow the user to choose the right location(s) for the camera(s) according to his application.

In Figure 6 the camera 50 is provided at the moving carriage 10. It is thus movable relative to the base 5 in the two directions X and Y.

In Figure 7 two cameras 50, 50' are provided at the two legs of the frame 7. Both are movable in the direction X. In this example, a first camera 50 is directed in the direction Y, and a second camera 50' is directed in the direction X. This allows taking images of the object 15 from different viewpoints.

For instance, an additional camera can be provided in order to take an image of the object's side facing away from the first camera. In this case, since two images are available, one of the two images can be chosen as basis for controlling the driving means. In this case, the probe head's position and movement direction will be deciding which image is used.

Alternatively, it can be possible to provide a rotatable base for taking an image of the side not facing towards the camera. By comparing the 3D-positions of object points visible in both images, the 3D-positions of the not any longer visible object points can be calculated with sufficient accuracy. Thus, an exact positioning of the object to be measured is not unambiguously necessary in this case. Here, it is possible to move the probe head also from the side not facing towards the camera without a risk of a sudden impact between the probe head and the object to be measured.

The invention is not restricted to a CMM as shown in Figures 1, 2, 6 or 7. It may equally be used for coordinate measuring machines in gantry design, in which only the bridge with two supports, functioning as very short feet, can travel along two highly placed fixed rails. Moreover, the invention may generally be used for all types of coordinate measuring machines, i.e. for a CMM being designed as parallel kinematics machine as well as for a CMM having linear or serial kinematics. Exemplarily, the CMM may be designed in bridge-type, L-bridge-type, horizontal-arm-type, cantilever-type or gantry-type.

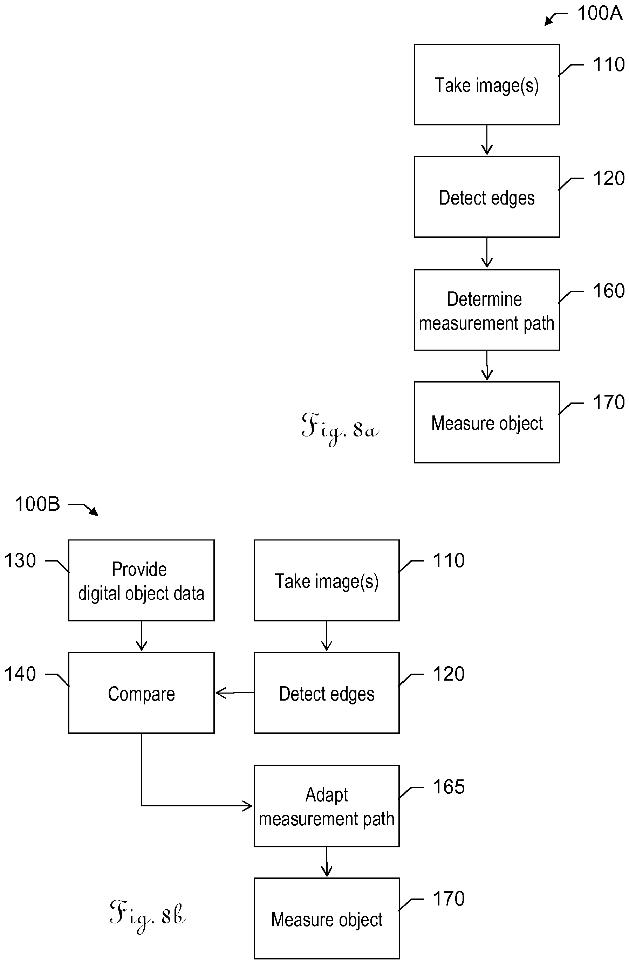

In Figures 8a-c three flow charts are shown for illustrating three different embodiments of a method according to the invention.

The user starts a measuring process with performing a first manual command, for instance by pressing a start bottom at the CMM. The successive measuring process may be performed fully- or semi-automated, i.e. the user inputs further commands into the CMM or does not. The manual command is detected by input means and starts the determination of the object, wherein a driving command is generated, which is transmitted to the drive mechanism of the CMM. The drive mechanism then drives the frame components of the CMM according to the driving command so that a capturing position for a camera is reached.

The method 100A illustrated in Figure 8a comprises the following steps:
- taking at least one image of an object to be measured by a CMM (step 110) by means of the camera,
- detecting edges of the object in the at least one image (step 120),
- determining a measurement path for a probe head of the CMM based on the detected edges (step 160), and
- measuring coordinates of the object with the probe head by moving the probe head along the determined measurement path (step 170).

Figure 8b shows a second embodiment of the method 100B. In this embodiment, the type of the object to be measured by the CMM is known and digital nominal data of the object is provided 130. The provided data also comprises a standard measurement path for the object type. As in the first embodiment, at least one image of an object to be measured by a CMM is taken (step 110), and edges of the object are detected in the at least one image (step 120).

Image data comprising the detected edges is then compared with the provided nominal data (step 140) in order to detect relevant deviations of the actual object from the model described by the provided data. If such deviations are detected, in step 165, the provided measurement path is adapted (or abandoned and replaced by a new one), to ensure that all features of the object will be measured and to prevent damage to the probe or the object. In the last step 170, coordinates of the object are then measured with the probe head by moving the probe head along the adapted measurement path.

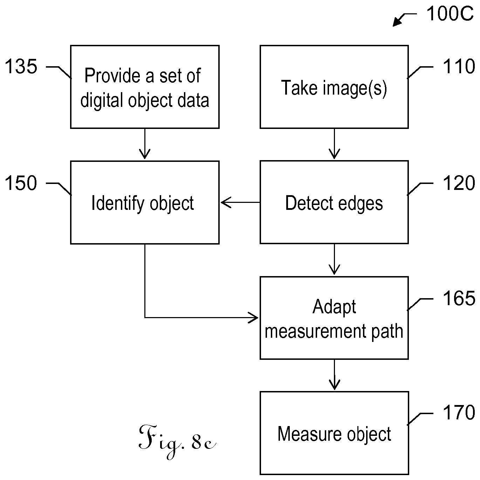

Figure 8c shows a flow chart which illustrates a further embodiment of the method 100C comprising an identification of an object for measuring said object subsequently with use of a coordinate measuring machine.

In the first shown step 110 a first image of the measuring volume with an object therein are captured. Based on the image data, in step 120, edges of the object are determined by image processing and edge data is generated.

In this embodiment the type of the object is not known so far, but a set of digital object data is provided (step 135), which also encloses digital data of the object type.

In step 150, based on the edge data, the object type is identified in the set of digital object data, e. g. by comparing dimensions of certain object features.

If the object cannot be identified unambiguously from the edge data of first image, the camera is realigned and a second image is captured from a second position and direction. Alternatively or additionally, the resolution of the camera or cameras is changed. The edge data is then updated considering the additional captured image or images. Particularly, such additional image capturing and updating of processing information is performed either until the object is identified and/or until the whole measuring volume is captured and analysed.

If the object is identified, a measurement path is generated. In this embodiment, the digital object data comprises information about an optimized pre-defined measurement path. Based on the determined edges, differences between the actual data and the nominal data of the digital object data of the identified object type are determined. The pre-defined measurement path is adapted according to the determined differences (step 165).

Subsequently, in step 170, controlling information based on the measurement path is generated and the spatial coordinates of the object are measured by the probe of the CMM which is moved according to the controlling information.

Depending on the object type and of the feature or features of the object to be measured, in step 110 of each of the three methods 100A, 100B and 100C different image collection scenario can be used:
Image data from a single image, taken with a broad field of view and from the right orientation can already provide the necessary information. If it does not, the step of taking at least one image can be repeated with a different position of the camera(s) until it does.
Several images from different directions can also be taken right from the start, and the image data can be used to build a rough 3D model of the object by means of photogrammetry. The needed information for detecting the edges can then be extracted from this model.

A first image can be taken from a position far away from the object first, and edges are detected in the image data of this first image. Then the camera is moved closer to the object, and oriented based on the edges recognized in the first image. This can be repeated, until edges of the desired features are detectable in at least one image.

Each approach can be used either in conjunction with provided nominal data (e. g. CAD information) of the object or without it, wherein using provided nominal data usually accelerates the process.

Said methods can be applied to prepare the scanning of a certain feature or using touch trigger probing.

Especially when using touch trigger, the distance at which the probe head of the CMM moves at very low speed, before entering in contact with the workpiece, can be reduced, as the feature location is located precisely. This, advantageously, can improve the overall throughput.

Coming back to scanning, it also can be noted that the technology can be used for predicting the path; this means the CMM can run the scanning faster, since it will know when an edge will be reached or when a change in the scanning direction is needed. This can be used both for scanning of unknown objects (closed loop scanning) and for scanning of objects known from CAD models, that have alignment or part errors (open loop with observer).

The methods 100A, 100B, 100C according to Figures 8a-c are not restricted to CMM of portal type as e. g. shown in Figure 1 but may be executed in general with CMM of all known types. The methods 100A, 100B, 100C according to Figures 8a-c may generally be used with machines of any mechanical structure that is enabled to gather data in a measuring volume, i.e. machines enabling movement of machine parts in at least two degrees of freedom. Such CMM may be in designed as articulated arm, parallel kinematics or a CMM or robot having linear or serial kinematics. Exemplarily, the CMM may be designed in bridge-type, L-bridge-type, horizontal-arm-type, cantilever-type, gantry-type or as Delta Robot.

According to a specific embodiment of the invention, the images of the measuring volume may be captured by continuously gathering the images, in particular by recording a video stream.

As a result of the image capturing the object may be identified or output information may be generated providing information of non-identification of the object. If the object is not identified, e. g. a resolution of the camera or the camera itself may be switched or exchanged in order to repeat the object-recognition process with higher resolution or different capturing specifications (e. g. capturing with other wavelengths sensitivity) and trying to identify the object then. Otherwise, if the object is determined, alternative output information may be generated providing e. g. orientation and/or location of the object, the type of the object, coarse structure of the object and/or information about possible obstacles in space of the measuring volume to be considered for subsequent measurement of the object. Furthermore, the measuring path may be derived on basis of this information and the object may be scanned according to the derived path.

If the object is discovered and if a measuring path is derived by the gathered surface data or from a memory unit providing measuring paths for known (discovered) object types, coordinate measurement of the object is initiated based on the controlling information and spatial coordinated are determined. In order to perform such measurement a measuring sensor may be chosen (and mounted at the probe head) according to the controlling information and the measuring path may be adapted depending on the chosen sensor. Choosing the sensor may be performed automatically by the system, e.g. by maintaining demanded measuring resolution, or manually by the user. The user may be enabled either to chose a sensor type or a resolution to be reached and choosing a suitable sensor based on the demanded resolution.

While the invention has been described on the basis of presently preferred embodiments, modifications and adaptations can be performed within the scope of the claims.

For instance, while in the described embodiments a camera is provided at a fixed position, additionally or alternatively a camera can be provided near the probe head in a manner to be movable together with the probe head. Furthermore, such a camera can be rotatable in order to be directed to the probe head's moving direction at any time. Thereby it is possible to take an image of the object from a very close distance.

While in the embodiments the drive was described as a rack and pinion combination, other drive means such as a pneumatic or a hydraulic drive or a worm gear transmission may be suitably employed as drive means.

While in the embodiments a fixed (mechanical) probe head is shown, alternatively the probe head can be of a mechanical, optical, laser, or white light type amongst others. Furthermore, the probe head can be a powered rotary device with the probe tip able to swivel vertically through 90 degrees and through a full 360 degree rotation.

## Claims

1. Method (100A-C) for determining at least one spatial coordinate of a measurement point of an object (15) with a coordinate measuring machine (1), the method comprising
• providing nominal design data (40), particularly a computer aided design model, of the object (15),
• capturing at least a first image (20) of the object (15), the object being positioned in a measuring volume of the coordinate measuring machine (1),
• determining edges (31-39) in the at least first image (20) by identifying points in the at least first image (20), at which points the image brightness has discontinuities,
• identifying the object (15) based on the determined edges (31-39) and on the nominal design data (40),
• defining, based on the determined edges (31-39), a measurement path for a probe head (13) of the coordinate measuring machine (1) for approaching the measurement point with the probe head (13), and
• driving the probe head (13) along the measurement path.

2. Method according to claim 1,
**characterised in that**
nominal design data of a multitude of different object types is provided.

3. Method according to claim 1 or claim 2,
**characterised in that**
• dimensions of the object (15) are determined based on the recognized edges (31-39), and
• differences between the determined dimensions of the object and the nominal design data (40) of the object (15) are determined.

4. Method according to any one of claims 1 to 3,
**characterised in that**
a position and orientation of the object (15) is determined based on the determined edges (31-39) and on the nominal design data (40).

5. Method according to any one of claims 1 to 4,
**characterised in that**
• the nominal design data (40) of the object (15) comprises a pre-defined measurement path, and
• defining the measurement path for the probe head (13) comprises adapting the pre-defined measurement path based on the determined edges (31-39).

6. Method according to any one of claims 1 to 5,
**characterised in that**
• a second image of the object (15) is captured imaging an area of the object (15) which is not visible in the first image, and
• edges are determined in the first image and in the second image.

7. Method according to claim 6,
**characterised in that**
• the first image (20) is captured by a first camera (50) and the second image is captured by a second camera (50'), particularly simultaneously; or
• the first image (20) and the second image are captured successively by a first camera (50), wherein a position and/or orientation of the first camera (50) is changed between capturing the first image (20) and the second image based on information from the first image, particularly at least partially based on the determined edges (31-39) of the first image (20).

8. Coordinate measuring machine (1) for determining at least one spatial coordinate of a measurement point of an object (15), the coordinate measuring machine comprising
• a frame structure comprising a base (5) and a plurality of frame elements (7-11), wherein a probe head (13) is attached to one of the frame elements (7-11),
• a drive mechanism, adapted to drive the probe head (13) in a manner such that the probe head (13) is capable to move relative to the base (5) for approaching a measurement point in a measuring volume, the measuring volume representing a particular volume inside which the at least one spatial coordinate of the measurement point is determinable as to a design of the coordinate measuring machine (1), in particular as to a provided mobility of the probe head (13),
• an imaging unit comprising a first camera (50) that is adapted to be directed to the measuring volume for providing at least a first image (20) of an object (15) that is positioned in the measuring volume,
• calculation means, and
• a controller, adapted to control the drive mechanism, wherein the imaging unit comprises a data storage device to store nominal design data of objects (15) to be measured by the coordinate measuring machine (1), **characterised in that**
• the imaging unit comprises an edge detection functionality that is adapted to determine edges (31-39) of the object (15) in the at least first image (20) by identifying points in the image (20) at which the image brightness has discontinuities,
• the calculation means are adapted to identify the object (15) based on the determined edges (31-39) and on the nominal design data (40), and
• the controller is adapted to control the drive mechanism based on the recognized edges (31-39).

9. Coordinate measuring machine (1) according to claim 8,
**characterised in that**
the imaging unit
• is adapted to determine dimensions of the object based on the recognized edges, and
• is adapted to determine differences between the determined dimensions of the object and the nominal design data of the object (15).

10. Coordinate measuring machine (1) according to claim 8 or claim 9, being adapted as a portal-type CMM, wherein the frame structure comprises
• one or two legs (7),
• a bridge (9),
• a moving carriage (10), and
• a ram (11) to which the probe head (13) is attached,
**characterised in that**
the first camera (50) is positioned at the frame structure.

11. Coordinate measuring machine (1) according to claim 8 or claim 9,
**characterised in that**
the first camera (50) or a second camera (50') is positioned at the probe head (13).

12. Coordinate measuring machine (1) according to any one of claims 8 to 11,
**characterised in that**
the imaging unit
• comprises a second camera (50') that is positioned and oriented in such a way that it is directed to the measuring volume for providing at least a second image of the object (15), the at least second image imaging an area of the object (15) which is not visible for the first camera (50), and
• is adapted to recognize edges in the first image and in the second image.

13. Coordinate measuring machine (1) according to any one of claims 8 to 12,
**characterized in that**
at least one receptacle is provided at the frame structure and/or at the probe head (13), wherein the at least one receptacle and the first camera (50) are built so that the first camera is modularly linkable to the at least one receptacle and modularly releasable from the at least one receptacle.

14. Coordinate measuring machine (1) according to any one of claims 8 to 13,
**characterised in that**
the imaging unit is adapted to generate a digital model of the object (15) at least partially based on recognized edges (30-39), in particular a CAD-model.

15. Computer programme product, comprising programme code which is stored on a machine-readable medium, or being embodied by an electromagnetic wave comprising a programme code segment, and having computer-executable instructions for performing, when run on the calculation means and the controller of the coordinate measuring machine (1) according to any one of claims 8 to 13, the following steps of the method (100A-C) according to any one of the claims 1 to 7:
• capturing at least a first image (20) of the object (15), the object being positioned in a measuring volume of the coordinate measuring machine (1),
• determining edges (31-39) in the at least first image (20) by identifying points in the at least first image (20), at which points the image brightness has discontinuities,
• identifying the object (15) based on the determined edges (31-39) and on provided nominal design data (40),
• defining, based on the determined edges (31-39), a measurement path for a probe head (13) of the coordinate measuring machine (1) for approaching the measurement point with the probe head (13), and
• driving the probe head (13) along the measurement path.

## Patentansprüche

1. Verfahren (100A-C) zum Bestimmen mindestens einer Raumkoordinate eines Messpunkts eines Objekts (15) mit einer Koordinatenmessmaschine (1), wobei das Verfahren Folgendes umfasst:
• Bereitstellen von Nennkonstruktionsdaten (40), insbesondere eines computergestützten Konstruktionsmodells, des Objekts (15),
• Aufnehmen von mindestens einem ersten Bild (20) des Objekts (15), wobei das Objekt in einem Messvolumen der Koordinatenmessmaschine (1) positioniert ist,
• Bestimmen von Kanten (31-39) in dem mindestens einen ersten Bild (20) durch das Identifizieren von Punkten in dem mindestens einen ersten Bild (20), wobei die Bildhelligkeit in diesen Punkten Unstetigkeiten aufweist,
• Identifizieren des Objekts (15) auf Grundlage der bestimmten Kanten (31-39) und der Nennkonstruktionsdaten (40),
• Definieren einer Messstrecke für einen Sondenkopf (13) der Koordinatenmessmaschine (1) auf Grundlage der bestimmten Kanten (31-39), um sich dem Messpunkt mit dem Sondenkopf (13) zu nähern, und
• Antreiben des Sondenkopfs (13) entlang der Messstrecke.

2. Verfahren nach Anspruch 1,
**dadurch gekennzeichnet, dass**
Nennkonstruktionsdaten einer Vielzahl von unterschiedlichen Objekttypen bereitgestellt werden.

3. Verfahren nach Anspruch 1 oder Anspruch 2,
**dadurch gekennzeichnet, dass**
• Abmessungen des Objekts (15) auf Grundlage der erkannten Kanten (31-39) bestimmt werden und
• Differenzen zwischen den bestimmten Abmessungen des Objekts und den Nennkonstruktionsdaten (40) des Objekts (15) bestimmt werden.

4. Verfahren nach einem der Ansprüche 1 bis 3,
**dadurch gekennzeichnet, dass**
eine Position und Ausrichtung des Objekts (15) auf Grundlage der bestimmten Kanten (31-39) und der Nennkonstruktionsdaten (40) bestimmt werden.

5. Verfahren nach einem der Ansprüche 1 bis 4,
**dadurch gekennzeichnet, dass**
• die Nennkonstruktionsdaten (40) des Objekts (15) eine vordefinierte Messstrecke umfassen und
• das Definieren der Messstrecke für den Sondenkopf (13) das Anpassen der vordefinierten Messstrecke auf Grundlage der bestimmten Kanten (31-39) umfasst.

6. Verfahren nach einem der Ansprüche 1 bis 5,
**dadurch gekennzeichnet, dass**
• ein zweites Bild des Objekts (15) aufgenommen wird, das einen Bereich des Objekts (15) abbildet, der in dem ersten Bild nicht sichtbar ist, und
• Kanten in dem ersten Bild und in dem zweiten Bild bestimmt werden.

7. Verfahren nach Anspruch 6,
**dadurch gekennzeichnet, dass**
• das erste Bild (20) von einer ersten Kamera (50) aufgenommen wird und das zweite Bild von einer zweiten Kamera (50'), insbesondere gleichzeitig, aufgenommen wird; oder
• das erste Bild (20) und das zweite Bild nacheinander von einer ersten Kamera (50) aufgenommen werden, wobei eine Position und/oder Ausrichtung der ersten Kamera (50) zwischen dem Aufnehmen des ersten Bildes (20) und des zweiten Bildes auf Grundlage von Informationen aus dem ersten Bild, insbesondere zumindest teilweise auf Grundlage der bestimmten Kanten (31-39) des ersten Bildes, geändert wird bzw. werden.

8. Koordinatenmessmaschine (1) zum Bestimmen mindestens einer Raumkoordinate eines Messpunkts eines Objekts (15), wobei die Koordinatenmessmaschine Folgendes umfasst:
• eine Rahmenstruktur, umfassend eine Basis (5) und eine Vielzahl von Rahmenelementen (7-11), wobei ein Sondenkopf (13) an einem der Rahmenelemente (7-11) angebracht ist,
• einen Antriebsmechanismus, der angepasst ist, um den Sondenkopf (13) auf eine Weise anzutreiben, sodass der Sondenkopf (13) dazu in der Lage ist, sich in Bezug auf die Basis (5) zu bewegen, um sich einem Messpunkt in einem Messvolumen zu nähern, wobei das Messvolumen ein bestimmtes Volumen darstellt, in dem die mindestens eine Raumkoordinate des Messpunkts hinsichtlich einer Konstruktion der Koordinatenmessmaschine (1), insbesondere hinsichtlich einer bereitgestellten Mobilität des Sondenkopfs (13), bestimmt werden kann,
• eine Abbildungseinheit, umfassend eine erste Kamera (50), die angepasst ist, um auf das Messvolumen gerichtet zu sein, um mindestens ein erstes Bild (20) eines Objekts (15) bereitzustellen, das in dem Messvolumen positioniert ist,
• Berechnungsmittel und
• eine Steuerung, die angepasst ist, um den Antriebsmechanismus zu steuern, wobei die Abbildungseinheit eine Datenspeichervorrichtung umfasst, um Nennkonstruktionsdaten von Objekten (15) zu speichern, die von der Koordinatenmessmaschine (1) gemessen werden sollen,
**dadurch gekennzeichnet, dass**
• die Abbildungseinheit eine Kantendetektionsfunktion umfasst, die angepasst ist, um Kanten (31-39) des Objekts (15) in dem mindestens einen ersten Bild (20) durch das Identifizieren von Punkten in dem Bild (20) zu bestimmen, in denen die Bildhelligkeit Unstetigkeiten aufweist,
• die Berechnungsmittel angepasst sind, um das Objekt (15) auf Grundlage der bestimmten Kanten (31-39) und der Nennkonstruktionsdaten (40) zu identifizieren, und
• die Steuerung angepasst ist, um den Antriebsmechanismus auf Grundlage der erkannten Kanten (31-39) zu steuern.

9. Koordinatenmessmaschine (1) nach Anspruch 8,
**dadurch gekennzeichnet, dass**
die Abbildungseinheit
• angepasst ist, um Abmessungen des Objekts auf Grundlage der erkannten Kanten zu bestimmen, und
• angepasst ist, um Differenzen zwischen den bestimmten Abmessungen des Objekts und den Nennkonstruktionsdaten des Objekts (15) zu bestimmen.

10. Koordinatenmessmaschine (1) nach Anspruch 8 oder Anspruch 9, die als eine portalartige CMM ausgebildet ist, wobei die Rahmenstruktur Folgendes umfasst:
• einen oder zwei Schenkel (7),
• eine Brücke (9),
• einen beweglichen Schlitten (10) und
• einen Stößel (11), an dem der Sondenkopf (13) angebracht ist,
**dadurch gekennzeichnet, dass**
die erste Kamera (50) an der Rahmenstruktur positioniert ist.

11. Koordinatenmessmaschine (1) nach Anspruch 8 oder
Anspruch 9,
**dadurch gekennzeichnet, dass**
die erste Kamera (50) oder eine zweite Kamera (50') an dem Sondenkopf (13) positioniert ist.

12. Koordinatenmessmaschine (1) nach einem der Ansprüche 8 bis 11,
**dadurch gekennzeichnet, dass**
die Abbildungseinheit
• eine zweite Kamera (50') umfasst, die so positioniert und ausgerichtet ist, dass sie auf das Messvolumen gerichtet ist, um mindestens ein zweites Bild des Objekts (15) bereitzustellen, wobei das mindestens eine zweite Bild einen Bereich des Objekts (15) abbildet, der für die erste Kamera (50) nicht sichtbar ist, und
• angepasst ist, um Kanten in dem ersten Bild und in dem zweiten Bild zu erkennen.

13. Koordinatenmessmaschine (1) nach einem der Ansprüche 8 bis 12,
**dadurch gekennzeichnet, dass**
mindestens eine Aufnahme an der Rahmenstruktur und/oder an dem Sondenkopf (13) vorgesehen ist, wobei die mindestens eine Aufnahme und die erste Kamera (50) so aufgebaut sind, dass die erste Kamera modular mit der mindestens einen Aufnahme verknüpft werden kann und modular aus der mindestens einen Aufnahme gelöst werden kann.

14. Koordinatenmessmaschine (1) nach einem der Ansprüche 8 bis 13,
**dadurch gekennzeichnet, dass**
die Abbildungseinheit angepasst ist, um ein digitales Modell des Objekts (15) zumindest teilweise auf Grundlage von erkannten Kanten (30-39), insbesondere ein CAD-Modell, zu erzeugen.

15. Computerprogrammprodukt, umfassend Programmcode, der auf einem maschinenlesbaren Medium gespeichert ist oder durch eine elektromagnetische Welle, umfassend ein Programmcodesegment, ausgeführt wird und von einem Computer ausführbare Anweisungen aufweist, um bei einer Ausführung auf den Berechnungsmitteln und der Steuerung der Koordinatenmessmaschine (1) nach einem der Ansprüche 8 bis 13 die folgenden Schritte des Verfahrens (100A-C) nach einem der Ansprüche 1 bis 7 durchzuführen:
• Aufnehmen von mindestens einem ersten Bild (20) des Objekts (15), wobei das Objekt in einem Messvolumen der Koordinatenmessmaschine (1) positioniert ist,
• Bestimmen von Kanten (31-39) in dem mindestens einen ersten Bild (20) durch das Identifizieren von Punkten in dem mindestens einen ersten Bild (20), wobei die Bildhelligkeit in diesen Punkten Unstetigkeiten aufweist,
• Identifizieren des Objekts (15) auf Grundlage der bestimmten Kanten (31-39) und von bereitgestellten Nennkonstruktionsdaten (40),
• Definieren einer Messstrecke für einen Sondenkopf (13) der Koordinatenmessmaschine (1) auf Grundlage der bestimmten Kanten (31-39), um sich dem Messpunkt mit dem Sondenkopf (13) zu nähern, und
• Antreiben des Sondenkopfs (13) entlang der Messstrecke.

## Revendications

1. Procédé (100A-C) pour déterminer au moins une coordonnée spatiale d'un point de mesure d'un objet (15) avec une machine de mesure de coordonnée (1), le procédé comprenant
• la fourniture de données de conception nominales (40), en particulier d'un modèle de conception assistée par ordinateur, de l'objet (15),
• la capture d'au moins une première image (20) de l'objet (15), l'objet étant positionné dans un volume de mesure de la machine de mesure de coordonnée (1),
• la détermination de bords (31 à 39) dans l'au moins une première image (20) par identification de points dans l'au moins une première image (20), points au niveau desquels la luminosité d'image présente des discontinuités,
• l'identification de l'objet (15) sur la base des bords (31 à 39) déterminés et des données de conception nominales (40),
• la définition, sur la base des bords (31 à 39) déterminés, d'un trajet de mesure pour une tête de sonde (13) de la machine de mesure de coordonnée (1) afin d'approcher le point de mesure avec la tête de sonde (13), et
• l'entraînement de la tête de sonde (13) suivant le trajet de mesure.

2. Procédé selon la revendication 1,
**caractérisé en ce que**
des données de conception nominales d'une multitude de types d'objet différents sont fournies.

3. Procédé selon la revendication 1 ou la revendication 2,
**caractérisé en ce que**
• des dimensions de l'objet (15) sont déterminées sur la base des bords (31 à 39) reconnus, et
• des différences entre les dimensions déterminées de l'objet et les données de conception nominales (40) de l'objet (15) sont déterminées.

4. Procédé selon l'une quelconque des revendications 1 à 3,
**caractérisé en ce que**
une position et une orientation de l'objet (15) sont déterminées sur la base des bords (31 à 39) déterminés et des données de conception nominales (40).

5. Procédé selon l'une quelconque des revendications 1 à 4,
**caractérisé en ce que**
• les données de conception nominales (40) de l'objet (15) comprennent un trajet de mesure prédéfini, et
• la définition du trajet de mesure pour la tête de sonde (13) comprend l'adaptation du trajet de mesure prédéfini sur la base des bords (31 à 39) déterminés.

6. Procédé selon l'une quelconque des revendications 1 à 5,
**caractérisé en ce que**
• une seconde image de l'objet (15) est capturée par imagerie d'une zone de l'objet (15) qui n'est pas visible dans la première image, et
• des bords sont déterminés dans la première image et dans la seconde image.

7. Procédé selon la revendication 6,
**caractérisé en ce que**
• la première image (20) est capturée par une première caméra (50) et la seconde image est capturée par une seconde caméra (50'), en particulier simultanément ;
ou
• la première image (20) et la seconde image sont capturées successivement par une première caméra (50), dans lequel une position et/ou une orientation de la première caméra (50) sont modifiées entre les captures de la première image (20) et de la seconde image sur la base d'informations provenant de la première image, en particulier au moins partiellement sur la base des bords (31 à 39) déterminés de la première image (20).

8. Machine de mesure de coordonnée (1) pour déterminer au moins une coordonnée spatiale d'un point de mesure d'un objet (15), la machine de mesure de coordonnée comprenant
• une structure de cadre comprenant une base (5) et une pluralité d'éléments de cadre (7 à 11), dans laquelle une tête de sonde (13) est attachée à l'un des éléments de cadre (7 à 11),
• un mécanisme d'entraînement, adapté pour entraîner la tête de sonde (13) de manière telle que la tête de sonde (13) soit capable de se déplacer par rapport à la base (5) pour approcher un point de mesure dans un volume de mesure, le volume de mesure représentant un volume particulier à l'intérieur duquel l'au moins une coordonnée spatiale du point de mesure peut être déterminée quant à une conception de la machine de mesure de coordonnée (1), en particulier quant à une mobilité prévue de la tête de sonde (13),
• une unité d'imagerie comprenant une première caméra (50) qui est adaptée pour être dirigée vers le volume de mesure afin de fournir au moins une première image (20) d'un objet (15) qui est positionné dans le volume de mesure,
• des moyens de calcul, et
• un dispositif de commande, adapté pour commander le mécanisme d'entraînement,
dans laquelle l'unité d'imagerie comprend un dispositif de stockage de données pour stocker des données de conception nominales d'objets (15) à mesurer par la machine de mesure de coordonnée (1), **caractérisée en ce que**
• l'unité d'imagerie comprend une fonctionnalité de détection de bords qui est adaptée pour déterminer des bords (31 à 39) de l'objet (15) dans l'au moins une première image (20) par identification de points sur l'image (20) au niveau desquels la luminosité d'image présente des discontinuités,
• les moyens de calcul sont adaptés pour identifier l'objet (15) sur la base des bords (31 à 39) déterminés et des données de conception nominales (40), et
• le dispositif de commande est adapté pour commander le mécanisme d'entraînement sur la base des bords (31 à 39) reconnus.

9. Machine de mesure de coordonnée (1) selon la revendication 8,
**caractérisée en ce que**
l'unité d'imagerie
• est adaptée pour déterminer des dimensions de l'objet sur la base des bords reconnus, et
• est adaptée pour déterminer des différences entre les dimensions déterminées de l'objet et les données de conception nominales de l'objet (15).

10. Machine de mesure de coordonnée (1) selon la revendication 8 ou la revendication 9, qui est adaptée sous la forme d'une machine de mesure de coordonnée de type à portique, dans laquelle la structure de cadre comprend
• un ou deux montants (7),
• un pont (9),
• un chariot mobile (10), et
• un coulisseau (11) auquel la tête de sonde (13) est attachée,
**caractérisée en ce que**
la première caméra (50) est positionnée au niveau de la structure de cadre.

11. Machine de mesure de coordonnée (1) selon la revendication 8 ou la revendication 9,
**caractérisée en ce que**
la première caméra (50) ou une seconde caméra (50') est positionnée au niveau de la tête de sonde (13).

12. Machine de mesure de coordonnée (1) selon l'une quelconque des revendications 8 à 11,
**caractérisée en ce que**
l'unité d'imagerie
• comprend une seconde caméra (50') qui est positionnée et orientée de telle sorte qu'elle soit dirigée vers le volume de mesure pour fournir au moins une seconde image de l'objet (15), l'au moins une seconde image imageant une zone de l'objet (15) qui n'est pas visible pour la première caméra (50), et
• est adaptée pour reconnaître des bords dans la première image et dans la seconde image.

13. Machine de mesure de coordonnée (1) selon l'une quelconque des revendications 8 à 12,
**caractérisée en ce que**
au moins un réceptacle est prévu au niveau de la structure de cadre et/ou au niveau de la tête de sonde (13), dans laquelle l'au moins un réceptacle et la première caméra (50) sont construits de sorte que la première caméra puisse être liée de façon modulaire à l'au moins un réceptacle et puisse être libérée de façon modulaire de l'au moins un réceptacle.

14. Machine de mesure de coordonnée (1) selon l'une quelconque des revendications 8 à 13,
**caractérisée en ce que**
l'unité d'imagerie est adaptée pour générer un modèle numérique de l'objet (15) au moins partiellement sur la base de bords (30 à 39) reconnus, en particulier un modèle de conception assistée par ordinateur.

15. Produit-programme d'ordinateur, comprenant un code de programme qui est stocké sur un support lisible par machine, ou étant mis en œuvre par une onde électromagnétique comprenant un segment de code de programme, et ayant des instructions exécutables par ordinateur destinées à réaliser, lorsqu'elles sont exécutées sur les moyens de calcul et le dispositif de commande de la machine de mesure de coordonnée (1) selon l'une quelconque des revendications 8 à 13, les étapes suivantes du procédé (100A-C) selon l'une quelconque des revendications 1 à 7 :
• la capture d'au moins une première image (20) de l'objet (15), l'objet étant positionné dans un volume de mesure de la machine de mesure de coordonnée (1),
• la détermination de bords (31 à 39) dans l'au moins une première image (20) par identification de points dans l'au moins une première image (20), points au niveau desquels la luminosité d'image présente des discontinuités,
• l'identification de l'objet (15) sur la base des bords (31 à 39) déterminés et de données de conception nominales (40) fournies,
• la définition, sur la base des bords (31 à 39) déterminés, d'un trajet de mesure pour une tête de sonde (13) de la machine de mesure de coordonnée (1) afin d'approcher le point de mesure avec la tête de sonde (13), et
• l'entraînement de la tête de sonde (13) suivant le trajet de mesure.
